# EUROPÄISCHE PATENTSCHRIFT

(11) **EP 2 704 919 B1**
(45) Veröffentlichungstag und Bekanntmachung des Hinweises auf die Patenterteilung: **21.03.2018**
(21) Anmeldenummer: 12717185.8
(22) Anmeldetag: 16.04.2012
(51) Int. Cl.: B60N 2/015, B60N 2/36, B60N 2/44, E05B 17/00

(54) **VERRIEGELUNGSVORRICHTUNG UND FAHRZEUGSITZ**
LOCKING DEVICE AND VEHICLE SEAT
DISPOSITIF DE VERROUILLAGE ET SIÈGE DE VÉHICULE

(30) Priorität: 06.05.2011 DE 102011101283
(43) Veröffentlichungstag der Anmeldung: 12.03.2014
(73) Patentinhaber: Adient Luxembourg Holding S.à r.l., 1855 Luxembourg (LU)
(72) Erfinder: MÜLLER, Peter, 67686 Mackenbach (DE); WINDECKER, Volker, 67729 Sippersfeld (DE); HABER, Stefan, 66955 Pirmasens (DE); YASAROGLU, Kadir, 67655 Kaiserslautern (DE); LABUK, Silke, 67685 Weilerbach (DE)
(74) Vertreter: Liedhegener, Ralf
(86) Internationale Anmeldenummer: PCT/EP2012/001627
(87) Internationale Veröffentlichungsnummer: WO 2012/152362

(56) Entgegenhaltungen:
- DE-A1-102004 021 516
- DE-A1-102007 016 409
- DE-B3-102004 045 988
- US-A1- 2004 007 882

## Beschreibung

Die Erfindung betrifft eine Verriegelungsvorrichtung für einen Fahrzeugsitz mit den Merkmalen des Oberbegriffs des Anspruchs 1. Die Erfindung betrifft auch einen Fahrzeugsitz mit den Merkmalen des Anspruchs 11.

### Stand der Technik

Eine Möglichkeit zur Anwendung solcher Verriegelungsvorrichtungen besteht darin, dass sie zur Bodenanbindung eines Fahrzeugsitzes in einem Kraftfahrzeug dienen.

Der Spannexzenter übt im verriegelten Zustand über die Spannfläche ein schließendes Moment auf die Klinke aus.

Aus der DE 10 2007 016 409 A1 ist eine derartige Verriegelungsvorrichtung für einen Fahrzeugsitz, welche eine Klinke und einen Spannexzenter umfasst, bekannt.

Die US 2004 / 0 007 882 A1 offenbart eine Verriegelungsvorrichtung für einen Fahrzeugsitz mit einer vorgespannten Druckfeder, die mit ihrem einen Ende an einem Arm des Spannexzenters angreift und diesen in seiner Verriegelungslage federbelastend abstützt. Die DE102004021516 zeigt die Merkmale des Oberbegriffs des Anspruchs 1. Der Erfindung liegt die Aufgabe zu Grunde, eine Verriegelungsvorrichtung der eingangs genannten Art zu schaffen, die einen geringen Bauraum erfordert und ein geringes Gewicht aufweist.

### Lösung

Diese Aufgabe wird erfindungsgemäß dadurch gelöst, dass der Spannexzenter aus seiner Verriegelungslage in seine Entriegelungslage bewegbar ist, wobei eine vorgespannte Druckfeder vorgesehen ist, die mit ihrem einen Ende an einem Arm des Spannexzenters diesen in seine Verriegelungslage federbelastend abgestützt ist und mit ihrem anderen Ende die Klinke in Entriegelungsrichtung beaufschlagt.

Durch diese Ausbildung erfüllt der Spannexzenter neben der Funktion des Ausübens eines schließenden Moments auf die Klinke bei verriegeltem Zustand auch die Funktion des Auswerfens des Gegenelements bei Entriegelung der Verriegelungseinrichtung, so dass eine bauraumverringernde integrierte Auswurffunktion des Gegenelements mit hoher Auswurfkraft bei Entriegeln der Verriegelungseinrichtung geschaffen ist. Gleichzeitig sind aber die Verriegelungskräfte, die beim Einschwenken des Fahrzeugfesten Gegenelements auf die Klinke wirken, niedrig.

Zur Optimierung der Kräfte kann ein erster Hebelarm L1 zwischen dem Angriffspunkt der Druckfeder an der Klinke und der zweiten Achse größer sein als ein zweiter Hebelarm L2 zwischen dem Angriffspunkt der Druckfeder an dem Spannexzenter und der ersten Achse.

Zu einer weiteren Optimierung der Kräfteverhältnisse führt es, wenn ein dritter Hebelarm L3 zwischen dem Kontaktpunkt der ersten Funktionsfläche an der Spannfläche und der zweiten Achse größer ist als ein vierter Hebelarm L4 zwischen dem Kontaktpunkt der ersten Funktionsfläche an der Spannfläche und der ersten Achse.

Ist dabei das Verhältnis von drittem Hebelarm L3 zu viertem Hebelarm L4 größer als das Verhältnis von erstem Hebelarm L1 zu zweitem Hebelarm L2, so wirkt ein schließendes Drehmoment auf die Klinke.

Zur Betätigung des Spannexzenters kann ein Entriegelungsnehmer durch eine Betätigungseinrichtung entgegen einer Federkraft aus einer Verriegelungsstellung in eine Entriegelungsstellung um die erste Achse schwenkbar gelagert sein, durch den der Spannexzenter aus seiner Verriegelungslage in seine Entriegelungslage bewegbar ist.

Gemäß einer vorteilhaften Weiterbildung der Erfindung ist ein Entriegelungsgeber entgegen einer Federkraft aus einer Verriegelungsstellung in eine Entriegelungsstellung um die zweite Achse schwenkbar gelagert und über eine Mitnahmekopplung derart mit dem Entriegelungsnehmer gekoppelt, dass durch eine Schwenkbewegung des Entriegelungsnehmers aus der Verriegelungsstellung in die Entriegelungsstellung, beziehungsweise aus der Entriegelungsstellung in die Verriegelungsstellung, der Entriegelungsgeber von seiner Verriegelungsstellung in seine Entriegelungsstellung, beziehungsweise aus der Entriegelungsstellung in die Verriegelungsstellung, mitgenommen wird.

Ist ein Fangexzenter um die erste Achse schwenkbar gelagert und sichert durch Zusammenwirken mit der ersten Funktionsfläche der Klinke einen verriegelten Zustand der Klinke, wobei die Klinke im verriegelten Zustand durch eine Fangfläche des Fangexzenters abstützbar ist und wobei durch den um die erste Achse schwenkbaren Entriegelungsnehmer der Fangexzenter zwischen seiner Verriegelungsposition und seiner Entriegelungsposition bewegbar ist, so stützt bei verriegelter Verriegelungsvorrichtung in einem Crashfall der Fangexzenter mit der Fangfläche die Klinke an deren erster Funktionsfläche ab.

Ebenfalls zu einem auf die Klinke einwirkenden schließenden Drehmoment führt es, wenn der Spannexzenter durch eine vorgespannte Zugfeder in Richtung seiner Verriegelungslage federbeaufschlagt ist. Weiterhin werden dadurch Spiele zwischen den Teilen freigestellt und damit störende Klappergeräusche vermieden.

Ist der Spannexzenter zwischen dem Fangexzenter und dem Entriegelungsnehmer schwenkbar auf der ersten Achse gelagert und weist der Entriegelungsnehmer einen parallel zur ersten Achse sich erstreckenden Mitnehmer auf, der in eine Mitnahmeausnehmung des Fangexzenters eingreift und durch den der Spannexzenter in Richtung seiner Entriegelungslage schwenkbar mitnehmbar ist, so wird bei kompaktem Aufbau der Fangexzenter in beide Schwenkrichtungen durch den Entriegelungsnehmer mitgenommen, während der Spannexzenter nur in Richtung seiner Entriegelungslage von dem Entriegelungsnehmer mitgenommen wird.

In einfachem und radiale Toleranzen des Mitnehmers kompensierendem Aufbau kann dabei die Mitnahmeausnehmung eine Mitnahmegabel sein.

Es versteht sich, dass auch andere geeignete Kopplungsvarianten anwendbar sind.

Die Aufgabe wird auch durch einen Fahrzeugsitz mit den Merkmalen des Anspruchs 11 gelöst.

### Figuren und Ausführungsformen der Erfindung

Im Folgenden ist die Erfindung anhand von einem in den Zeichnungen dargestellten vorteilhaften Ausführungsbeispiel näher erläutert. Die Erfindung ist jedoch nicht auf dieses Ausführungsbeispiel beschränkt. Es zeigen:

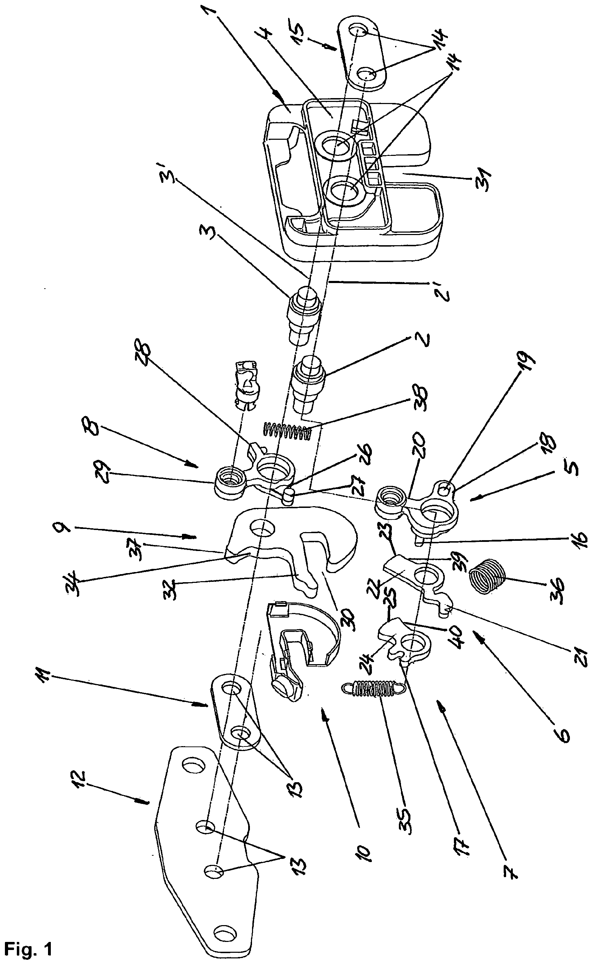

- Figur 1: eine Explosionsdarstellung einer Verriegelungsvorrichtung,
- Figur 2: eine frontseitige Innenansicht der Verriegelungsvorrichtung nach Figur 1 in Verriegelungsstellung,
- Figur 3: eine frontseitige Innenansicht der Verriegelungsvorrichtung nach Figur 1 in der Entriegelungsstellung,
- Figur 4: eine rückseitige Innenansicht der Verriegelungsvorrichtung nach Figur 1 in der Verriegelungsstellung und
- Figur 5: eine frontseitige Innenansicht der Verriegelungsvorrichtung nach Figur 1 in der Verriegelungsstellung ohne Klinke.

Die dargestellte Verriegelungsvorrichtung ist an einem Bodenbereich eines Fahrzeugsitzes angeordnet und weist ein topfartiges Gehäuse 1 auf, in dem parallel zueinander ein erster Achsbolzen 2 und ein zweiter Achsbolzen 3 sich quer zum Boden 4 des Gehäuses 1 erstreckend fest angeordnet sind.

Auf dem ersten Achsbolzen 2 sind parallel nebeneinander ein Entriegelungsnehmer 5, ein Spannexzenter 6 und ein Fangexzenter 7 um eine erste Achse 2' schwenkbar gelagert.

Auf dem zweiten Achsbolzen 3 sind parallel nebeneinander ein Entriegelungsgeber 8 und eine Klinke 9 um eine zweite Achse 3' schwenkbar gelagert, wobei auf die Klinke 9 eine Hülle 10 aufgeklipst ist.

Über ein erstes Koppelblech 11 liegt eine Adapterplatte 12 sich quer über die Öffnung des Gehäuses erstreckend an dem Gehäuse 1 an.

Der erste Achsbolzen 2 und der zweite Achsbolzen 3 sind mit ihren freien Enden in Lagerbohrungen 13 des ersten Koppelblechs 11 und der Adapterplatte 12 sowie in Lagerbohrungen 14 des Bodens 4 und eines an der Außenseite des Bodens 4 anliegenden zweiten Koppelblechs 15 gelagert.

Der Entriegelungsnehmer 5 weist einen zapfenartigen Mitnehmer 16 auf, der sich parallel zum ersten Achsbolzen 2 über den Spannexzenter 6 hinweg in eine Mitnahmegabel 17 des Fangexzenters 7 hineinragend erstreckt.

Im Wesentlichen diametral dem Mitnehmer 16 gegenüberliegend weist der Entriegelungsnehmer 5 einen radial gerichteten Entriegelungsnehmerarm 18 auf, in dessen freiem Endbereich ein sich radial erstreckendes Koppellangloch 19 ausgebildet ist.

Etwa 90° zum Entriegelungsnehmerarm 18 erstreckt sich radial ein Nehmerbetätigungsarm 20 des Entriegelungsnehmers 5.

Der Spannexzenter 6 besitzt einen sich im Wesentlichen radial erstreckenden Federangriffsarm 21 und diametral dazu einen Spannflächenarm 22, der an seinem freien Ende eine Spannfläche 23 aufweist.

Der Fangexzenter 7 besitzt etwa 90° zur Mitnahmegabel 17 sich radial erstreckend einen Fangflächenarm 24, der an seinem freien Ende eine Fangfläche 25 aufweist.

Entriegelungsgeber 8 und Entriegelungsnehmer 5 sind einander in einer Ebene gegenüberliegend auf dem zweiten Achsbolzen 3 bzw. dem ersten Achsbolzen 2 angeordnet.

Der Entriegelungsgeber 8 weist einen Entriegelungsgeberarm 26 auf, welcher sich radial nach außen in Richtung zu dem Entriegelungsnehmer 5 hin erstreckt. Der Entriegelungsgeberarm 26 trägt einen sich parallel zu dem zweiten Achsbolzen 3 erstreckenden Koppelzapfen 27, welcher in das Koppellangloch 19 des Entriegelungsnehmers 5 eingreift.

Diametral dem Entriegelungsgeberarm 26 gegenüberliegend erstreckt sich radial ein Federabstützarm 28 des Entriegelungsgebers 8. Quer zum Entriegelungsgeberarm 26 und zum Federabstützarm 28 sich radial erstreckend besitzt der Entriegelungsgeber 8 einen Geberbetätigungsarm 29.

Die Klinke 9 weist ein Hakenmaul 30 auf, welches mit einem z.B. an einem Boden eines Fahrzeugs fest angeordneten Bolzen 33 als Gegenelement zusammenwirkt und im verriegelten Zustand der Verriegelungsvorrichtung eine im Gehäuse 1 ausgebildete Bolzenaufnahme 31 senkrecht kreuzt. Im geöffneten Zustand öffnet sich das Hakenmaul 30 schräg zur Bolzenaufnahme 31 hin.

Nach oben hin wird das Hakenmaul 30 durch einen Finger 32 der Klinke 9 begrenzt, wobei die so definierte Breite des Hakenmauls 30 geringfügig größer ist als der Durchmesser des Bolzens 33.

Die Klinke 9 weist weiterhin eine erste Funktionsfläche 34 auf, welche in der verriegelten Stellung näherungsweise in Richtung des zweiten Achsbolzens 3 weist. Die erste Funktionsfläche 34 ist beispielsweise kreisbogenförmig gekrümmt und konkav ausgebildet.

Der Spannexzenter 6 und der Fangexzenter 7 besitzen jeweils eine geringere Breite als die Klinke 9 und sind beide der Klinke 9 gegenüberliegend angeordnet.

Der Spannexzenter 6 ist durch eine zwischen dem Gehäuse und dem Spannexzenter 6 wirkende Zugfeder 35 zur Klinke 9 hin vorgespannt.

Im verriegelten Zustand übt der Spannexzenter 6 über die exzentrisch zum ersten Achsbolzen 3 gekrümmte Spannfläche 23, welche sich in nicht selbsthemmendem Kontakt mit der ersten Funktionsfläche 34 befindet, ein schließendes Moment auf die Klinke 9 aus. Die Spannfläche 23 ist beispielweise kreisbogenförmig gekrümmt und konvex ausgebildet.

Die Fangfläche 25 des Fangexzenters 7 befindet sich in der Nachbarschaft zur Spannfläche 23, jedoch im verriegelten Zustand beabstandet zur ersten Funktionsfläche 34. Die Fangfläche 25 ist beispielsweise kreisbogenförmig gekrümmt und konvex ausgebildet. In einem Crashfall, wenn die Klinke 9 eventuell ein öffnendes Moment erfährt und den Spannexzenter 6 wegdrückt, gelangt die Fangfläche 25 in Anlage an die erste Funktionsfläche 34 zur Abstützung der Klinke 9 und zur Verhinderung des Öffnens derselben.

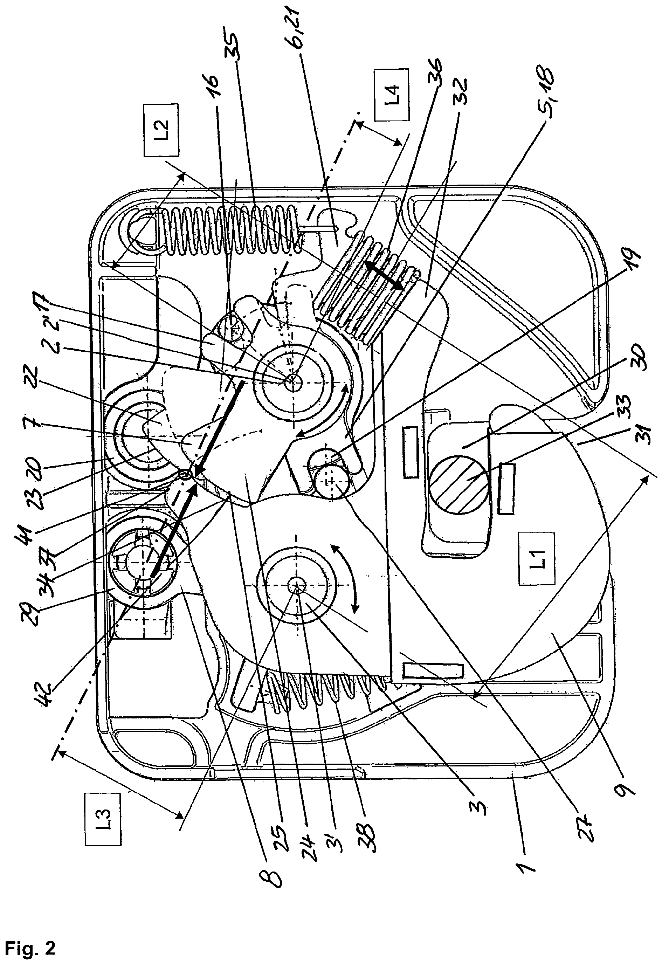

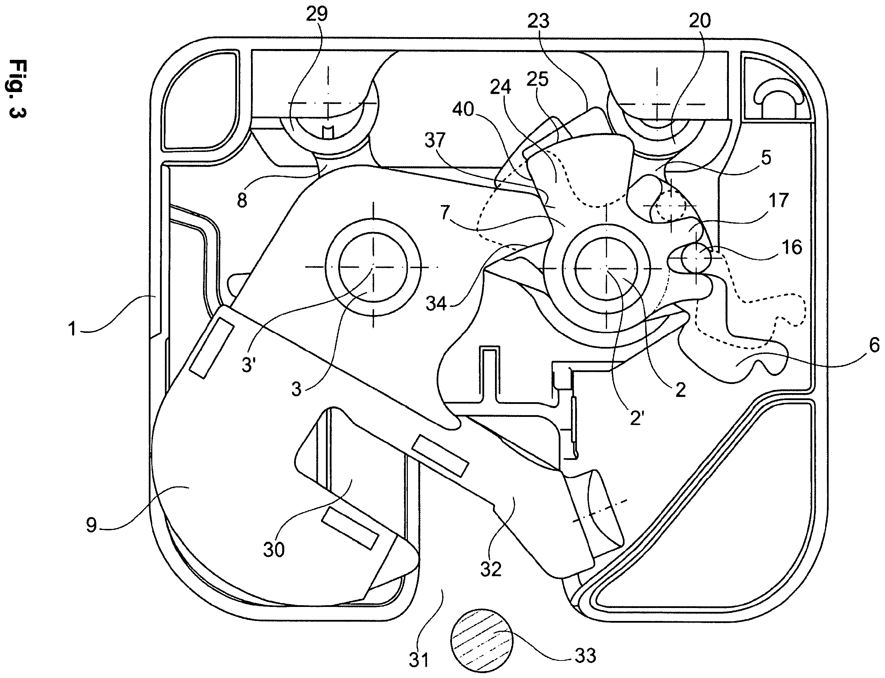

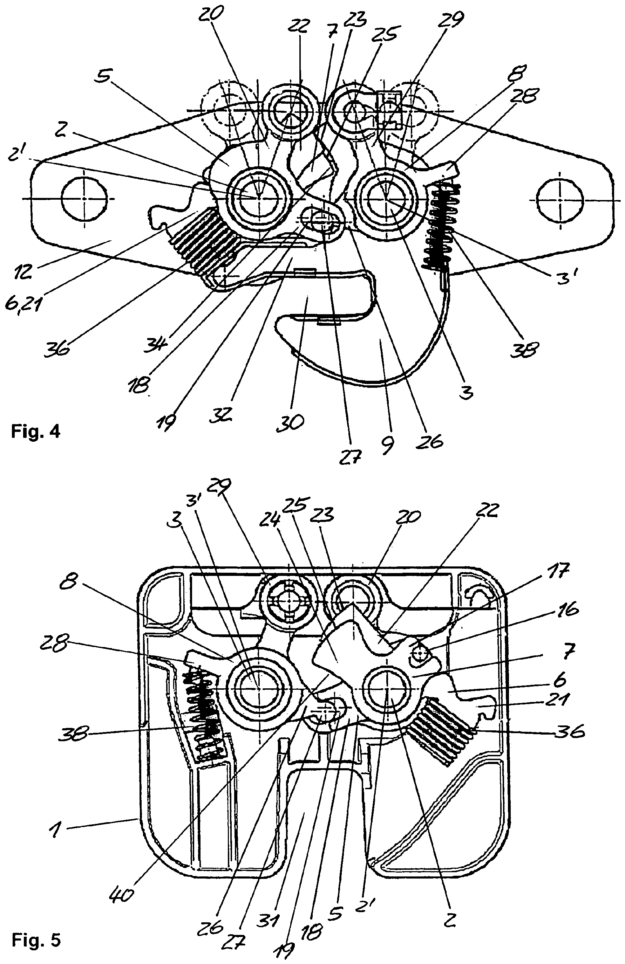

Durch Bewegen des Nehmerbetätigungsarms 20 oder des mit diesem gekoppelten Geberbetätigungsarms 29 durch eine Betätigungseinrichtung vom verriegelten Zustand (Figuren 2, 4 und 5) in den entriegelten Zustand (Figur 3) schwenkt der Fangexzenter 7 von der Klinke 9 weg. Dadurch entfernt sich die Fangfläche 25 von der ersten Funktionsfläche 34.

Über den Mitnehmer 16 nimmt der Fangexzenter 7 nach einem kleinen Leerhub den Spannexzenter 6 mit. Die Klinke 9 ist dann nicht länger gesichert.

Durch eine mit ihrem einen Ende den Spannexzenter 6 in Richtung seiner Verriegelungslage und mit ihrem anderen Ende die Klinke 9 in Entriegelungsrichtung beaufschlagende, vorgespannte Druckfeder 36 wird dabei die Klinke 9 schlagartig in ihre Entriegelungsstellung bewegt und dadurch der sich im Hakenmaul 30 und der Bolzenaufnahme 31 befindliche Bolzen 33 durch den Finger 32 aus dem Hakenmaul 30 und der Bolzenaufnahme 31 ausgeworfen.

Dabei schiebt sich die Klinke mit einer Funktionsfläche 37, welche im Wesentlichen quer zur ersten Funktionsfläche 34 ausgebildet ist, am Spannexzenter 6 und am Fangexzenter 7 vorbei.

Da der erste Hebelarm L1 zwischen dem Angriffspunkt der Druckfeder 36 an der Klinke 9 und der zweiten Achse 3' größer ist als der zweite Hebelarm L2 zwischen dem Angriffspunkt der Druckfeder 36 an dem Spannexzenter 6 und der ersten Achse 2', ist die Auswurfkraft, welche von der Klinke 9 auf den Bolzen 33 ausgeübt wird, relativ hoch. Die Betätigungskraft zum Bewegen des Nehmerbetätigungsarms 20 oder des Geberbetätigungsarms 29 ist vergleichsweise niedrig.

Die Druckfeder 36 wirkt mit gleicher Größe ihrer Kraft sowohl auf die Klinke 9 als auch auf den Spannexzenter 6. Durch die unterschiedliche Länge des ersten Hebelarms L1 und des zweiten Hebelarms L2 wirkt ein größeres öffnendes Drehmoment auf die Klinke 9 als ein schließendes Drehmoment auf den Spannexzenter 6.

Klinke 9 und Spannexzenter 6 stützen sich in einem Kontaktpunkt 41 gegenseitig ab. Durch den dritten Hebelarm L3 zwischen dem Kontaktpunkt 41 und der zweiten Achse 3' und den vierten Hebelarm L4 zwischen dem Kontaktpunkt 41 und der ersten Achse 2' werden durch die wirkenden Drehmomente aufgrund der Kraft der Druckfeder 36 Kontaktkräfte erzeugt. Der dritte Hebelarm L3 ist dabei größer als der vierte Hebelarm L4. Dadurch ist die Kontaktkraft des Spannexzenters 6 auf die Klinke 9 größer als die Gegenkraft der Klinke 9 auf den Spannexzenter 6.

Dadurch, dass das Verhältnis von drittem Hebelarm L3 zu viertem Hebelarm L4 größer ist als das Verhältnis von erstem Hebelarm L1 zu zweitem Hebelarm L2, wirkt effektiv ein schließendes Drehmoment auf die Klinke 9.

Wird die Beaufschlagung in Entriegelungsrichtung von Nehmerbetätigungsarm 20 oder Geberbetätigungsarm 29 beendet, drückt eine zweite vorgespannte Druckfeder 38 zwischen Federabstützarm 28 und Gehäuse 1 den Entriegelungsgeber 8 und den mit ihm gekoppelten Entriegelungsnehmer 5 in Verriegelungsrichtung.

Durch die Zugfeder 35 wird dabei der Spannexzenter 6 gegen die zweite Funktionsfläche 37 gedrückt und liegt mit einer Anlagefläche 39 an der zweiten Funktionsfläche 37 an, wobei die Flächennormale der zweiten Funktionsfläche 37 und der Anlagefläche 39 vor dem Zentrum des zweiten Achsbolzens 3 und dem Hakenmaul 30 verläuft. Damit übt der Spannexzenter 6 über die Anlagefläche 39 ein öffnendes Moment auf die Klinke 9 aus, welches diese geöffnet hält.

Der Fangexzenter 7 macht die Bewegung des Spannexzenters 6 mit. Der Fangexzenter 7 weist eine Anlagefläche 40 auf, die normalerweise im verriegelten Zustand einen geringen Abstand 42 zur zweiten Funktionsfläche 37 aufweist und nur in einem Crashfall gegen die zweite Funktionsfläche 37 zur Anlage kommt. Auch die Flächennormale der Anlagefläche 40 verläuft vor dem Zentrum des zweiten Achsbolzens 3 und dem Hakenmaul 30. Durch die schließende Kraft des Spannexzenters 6, die auf die Klinke 9 wirkt, wird der fahrzeugfeste Bolzen 33 gegen das Gehäuse gedrückt.

Gelangt der Bolzen 33 wieder in die Bolzenaufnahme 31 und in Anlage an den Finger 32, drückt der Bolzen 33 die Klinke 9 in Verriegelungsrichtung.

Durch die Anordnung der Druckfeder 36 zwischen Klinke 9 und Spannexzenter 6 werden nur vergleichsweise niedrige Verriegelungskräfte benötigt, die beim Einschwenken des fahrzeugseitigen Bolzens 33 auf die Klinke 9 wirken.

Dabei schwenkt die zweite Funktionsfläche 34 der Klinke 9 von dem Fangexzenter 7 und dem Spannexzenter 6 weg.

Durch die Zugfeder 35 und die Druckfeder 36 wird dabei der Spannexzenter 6 in seine Verriegelungsstellung geschwenkt. Dabei beaufschlagt der Spannexzenter 6 auch den Mitnehmer 16, der den Fangexzenter 7 ebenfalls in seine Verriegelungsstellung schwenkt.

Es versteht sich, dass die Verriegelungsvorrichtung an jeder Stelle eines Fahrzeugsitzes angeordnet sein kann und mit einem Gegenelement eines Fahrzeugs zusammenwirken kann.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 1: Gehäuse
- 2: erster Achsbolzen
- 2': erste Achse
- 3: zweiter Achsbolzen
- 3': zweite Achse
- 4: Boden
- 5: Entriegelungsnehmer
- 6: Spannexzenter
- 7: Fangexzenter
- 8: Entriegelungsgeber
- 9: Klinke
- 10: Hülle
- 11: erstes Koppelblech
- 12: Adapterplatte
- 13: Lagerbohrungen
- 14: Lagerbohrungen
- 15: zweites Koppelblech
- 16: Mitnehmer
- 17: Mitnehmergabel
- 18: Entriegelungsnehmerarm
- 19: Koppellangloch
- 20: Nehmerbetätigungsarm
- 21: Federangriffsarm
- 22: Spannflächenarm
- 23: Spannfläche
- 24: Fangflächenarm
- 25: Fangfläche
- 26: Entriegelungsgeberarm
- 27: Koppelzapfen
- 28: Federabstützarm
- 29: Geberbetätigungsarm
- 30: Hakenmaul
- 31: Bolzenaufnahme
- 32: Finger
- 33: Bolzen
- 34: erste Funktionsfläche
- 35: Zugfeder
- 36: Druckfeder
- 37: zweite Funktionsfläche
- 38: zweite Druckfeder
- 39: Anlegefläche
- 40: Anlegefläche
- 41: Kontaktpunkt
- 42: Abstand
- L1: erster Hebelarm
- L2: zweiter Hebelarm
- L3: dritter Hebelarm
- L4: vierter Hebelarm

## Patentansprüche

1. Verriegelungsvorrichtung für einen Fahrzeugsitz, insbesondere einen Kraftfahrzeugsitz,
mit einer um eine zweite Achse (3') schwenkbar gelagerten Klinke (9) zum Verriegeln eines Gegenelements,
mit einem Spannexzenter (6), der um eine zur zweiten Achse (3') parallele erste Achse (2') schwenkbar gelagert ist und durch Zusammenwirken mit einer ersten Funktionsfläche (34) der Klinke (9) einen verriegelten Zustand der Klinke (9) sichert, wobei der Spannexzenter (6) federbelastet im verriegelten Zustand über eine Spannfläche (23) auf die erste Funktionsfläche (34) einwirkt,
wobei der Spannexzenter (6) im verriegelten Zustand ein schließendes Moment auf die Klinke (9) ausübt,
**dadurch gekennzeichnet, dass**
der Spannexzenter (6) aus seiner Verriegelungslage in seine Entriegelungslage bewegbar ist,
wobei eine vorgespannte Druckfeder (36) vorgesehen ist, die mit ihrem einen Ende an einem Arm des Spannexzenters (6) diesen in seine Verriegelungslage federbelastend abgestützt ist und mit ihrem anderen Ende die Klinke (9) in Entriegelungsrichtung beaufschlagt.

2. Verriegelungsvorrichtung nach Anspruch 1, **dadurch gekennzeichnet, dass** ein erster Hebelarm L1 zwischen dem Angriffspunkt der Druckfeder (36) an der Klinke (9) und der zweiten Achse (3') größer ist als ein zweiter Hebelarm L2 zwischen dem Angriffspunkt der Druckfeder (36) an dem Spannexzenter (6) und der ersten Achse (2').

3. Verriegelungsvorrichtung nach einem der vorhergehenden Ansprüche, **dadurch gekennzeichnet, dass** ein dritter Hebelarm L3 zwischen dem Kontaktpunkt der ersten Funktionsfläche (34) an der Spannfläche (23) und der zweiten Achse (3') größer ist als ein vierter Hebelarm L4 zwischen dem Kontaktpunkt der ersten Funktionsfläche (34) an der Spannfläche (23) und der ersten Achse (2').

4. Verriegelungsvorrichtung nach den Ansprüchen 2 und 3, **dadurch gekennzeichnet, dass** das Verhältnis von drittem Hebelarm L3 zu viertem Hebelarm L4 größer ist als das Verhältnis von erstem Hebelarm L1 zu zweitem Hebelarm L2.

5. Verriegelungsvorrichtung nach einem der vorhergehenden Ansprüche, **dadurch gekennzeichnet, dass** ein Entriegelungsnehmer (5) entgegen einer Federkraft aus einer Verriegelungsstellung in eine Entriegelungsstellung um die erste Achse (2') schwenkbar gelagert ist, durch den der Spannexzenter (6) aus seiner Verriegelungslage in seine Entriegelungslage bewegbar ist.

6. Verriegelungsvorrichtung nach Anspruch 5, **dadurch gekennzeichnet, dass** ein Entriegelungsgeber (8) entgegen einer Federkraft aus einer Verriegelungsstellung in eine Entriegelungsstellung um die zweite Achse (3') schwenkbar gelagert, und über eine Mitnahmekopplung derart mit dem Entriegelungsnehmer (5) gekoppelt ist, dass durch eine Schwenkbewegung des Entriegelungsnehmers (5) aus der Verriegelungsstellung in die Entriegelungsstellung der Entriegelungsgeber (8) von seiner Verriegelungsstellung in seine Entriegelungsstellung mitgenommen wird.

7. Verriegelungsvorrichtung nach Anspruch 6, **dadurch gekennzeichnet, dass** durch eine Schwenkbewegung des Entriegelungsgebers (8) aus der Verriegelungsstellung in die Entriegelungsstellung der Entriegelungsnehmer (5) von seiner Verriegelungsstellung in seine Entriegelungsstellung mitgenommen wird.

8. Verriegelungsvorrichtung nach einem der vorhergehenden Ansprüche, **dadurch gekennzeichnet, dass** ein Fangexzenter (7) um die erste Achse (2') schwenkbar gelagert ist und durch Zusammenwirken mit der ersten Funktionsfläche (34) der Klinke (9) einen verriegelten Zustand der Klinke (9) sichert, wobei die Klinke (9) im verriegelten Zustand durch eine Fangfläche (25) des Fangexzenters (7) abstützbar ist und wobei durch den um die erste Achse (2') schwenkbaren Entriegelungsnehmer (5) der Fangexzenter (7) zwischen seiner Verriegelungsposition und seiner Entriegelungsposition bewegbar ist.

9. Verriegelungsvorrichtung nach Anspruch 8, **dadurch gekennzeichnet, dass** der Spannexzenter (6) zwischen dem Fangexzenter (7) und dem Entriegelungsnehmer (5) schwenkbar auf der ersten Achse (2') gelagert ist und der Entriegelungsnehmer (5) einen parallel zur ersten Achse (2') sich erstreckenden Mitnehmer (16) aufweist, der in eine Mitnahmeausnehmung des Fangexzenters (7) eingreift und durch den der Spannexzenter (6) in Richtung seiner Entriegelungslage schwenkbar mitnehmbar ist.

10. Verriegelungsvorrichtung nach einem der vorhergehenden Ansprüche, **dadurch gekennzeichnet, dass** der Spannexzenter (6) durch eine vorgespannte Zugfeder (38) in Richtung seiner Verriegelungslage federbeaufschlagt ist.

11. Fahrzeugsitz, umfassend mindestens eine Verriegelungsvorrichtung nach einem der vorhergehenden Ansprüche.

## Claims

1. Locking device for a vehicle seat, in particular a motor vehicle seat, having a pawl (9) which is mounted such that it can be pivoted about a second axis (3') in order to lock a counterelement, having a clamping eccentric (6) which is mounted such that it can be pivoted about a first axis (2') which is parallel to the second axis (3') and secures a locked state of the pawl (9) by interaction with a first functional face (34) of the pawl (9), the clamping eccentric (6) acting in a spring-loaded manner on the first functional face (34) via a clamping face (23) in the locked state, the clamping eccentric (6) exerting a closing moment on the pawl (9) in the locked state, **characterized in that** the clamping eccentric (6) can be moved out of its locked location into its unlocked location, a prestressed compression spring (36) being provided which is supported with its one end on an arm of the clamping eccentric (6) so as to spring-load the latter into its locked location and loads the pawl (9) in the unlocking direction with its other end.

2. Locking device according to Claim 1, **characterized in that** a first lever arm L1 between the action point of the compression spring (36) on the pawl (9) and the second axis (3') is greater than a second lever arm L2 between the action point of the compression spring (36) on the clamping eccentric (6) and the first axis (2').

3. Locking device according to one of the preceding claims, **characterized in that** a third lever arm L3 between the contact point of the first functional face (34) on the clamping face (23) and the second axis (3') is greater than a fourth lever arm L4 between the contact point of the first functional face (34) on the clamping face (23) and the first axis (2').

4. Locking device according to Claims 2 and 3, **characterized in that** the ratio of third lever arm L3 to fourth lever arm L4 is greater than the ratio of first lever arm L1 to second lever arm L2.

5. Locking device according to one of the preceding claims, **characterized in that** an unlocking slave (5) is mounted such that it can be pivoted about the first axis (2') counter to a spring force from a locked condition into an unlocked condition, by way of which unlocking slave (5) the clamping eccentric (6) can be moved from its locked location into its unlocked location.

6. Locking device according to Claim 5, **characterized in that** an unlocking master (8) is mounted such that it can be pivoted about the second axis (3') counter to a spring force from a locked condition into an unlocked condition and is coupled via a driving coupling to the unlocking slave (5) in such a way that the unlocking master (8) is driven from its locked condition into its unlocked condition by way of a pivoting movement of the unlocking slave (5) of the unlocking master (8) from the locked condition into the unlocked condition.

7. Locking device according to Claim 6, **characterized in that** the unlocking slave (5) is driven from its locked condition into its unlocked condition by way of a pivoting movement of the unlocking master (8) from the locked condition into the unlocked condition.

8. Locking device according to one of the preceding claims, **characterized in that** a catching eccentric (7) is mounted such that it can be pivoted about the first axis (2') and secures a locked state of the pawl (9) by way of interaction with the first functional face (34) of the pawl (9), it being possible for the pawl (9) to be supported in the locked state by a catching face (25) of the catching eccentric (7), and it being possible for the catching eccentric (7) to be moved between its locked position and its unlocked position by way of the unlocking slave (5) which can be pivoted about the first axis (2').

9. Locking device according to Claim 8, **characterized in that** the clamping eccentric (6) is mounted such that it can be pivoted on the first axis (2') between the catching eccentric (7) and the unlocking slave (5), and the unlocking slave (5) has a driver (16) which extends parallel to the first axis (2'), engages into a driving recess of the catching eccentric (7), and by way of which the clamping eccentric (6) can be driven pivotably in the direction of its unlocked location.

10. Locking device according to one of the preceding claims, **characterized in that** the clamping eccentric (6) is spring-loaded in the direction of its locked location by a prestressed tension spring (38).

11. Vehicle seat, comprising at least one locking device according to one of the preceding claims.

## Revendications

1. Dispositif de verrouillage pour un siège de véhicule, notamment un siège de véhicule automobile ; avec un cliquet (9) disposé de façon à pouvoir pivoter autour d'un deuxième axe (3') pour le verrouillage d'un contre-élément ;
avec un excentrique de serrage (6) disposé de façon à pouvoir pivoter autour d'un premier axe (2') parallèle au deuxième axe (3') et sécurisant un état verrouillé du cliquet (9) par interaction avec une première surface fonctionnelle (34) du cliquet (9), l'excentrique de serrage (6) agissant de façon chargé par ressort dans l'état verrouillé sur la première surface fonctionnelle (34) via une surface de serrage (23) ;
l'excentre de serrage (6) exerçant un couple de fermeture sur le cliquet (9) dans l'état verrouillé ;
**caractérisé en ce que** :
l'excentrique de serrage (6) pouvant être déplacé de sa position de verrouillage dans sa position de déverrouillage ;
un ressort de pression (36) précontraint étant prévu, ce ressort étant maintenu avec sa première extrémité contre un bras de l'excentrique de serrage (6) le chargeant par ressort dans sa position de verrouillage et chargeant avec son autre extrémité le cliquet (9) dans la direction de déverrouillage.

2. Dispositif de verrouillage selon la revendication 1, **caractérisé en ce qu'**un premier bras de levier L1 prévu entre le point d'accroche du ressort de pression (36) au niveau du cliquet (9) et le deuxième axe (3') est plus grand qu'un deuxième bras de levier L2 prévu entre le point d'accroche du ressort de pression (36) au niveau de l'excentrique de serrage (6) et le premier axe (2').

3. Dispositif de verrouillage selon l'une quelconque des revendications précédentes, **caractérisé en ce qu'**un troisième bras de levier L3 prévu entre le point de contact de la première surface fonctionnelle (34) au niveau de la surface de serrage (23) et le deuxième axe (3') est plus grand que le quatrième bras de levier L4 prévu entre le point de contact de la première surface fonctionnelle (34) au niveau de la surface de serrage (23) et le premier axe (2').

4. Dispositif de verrouillage selon les revendications 2 et 3, **caractérisé en ce que** le rapport du troisième bras de levier L3 sur le quatrième bras de levier L4 est supérieur au rapport du premier bras de levier L1 sur le deuxième bras de levier L2.

5. Dispositif de verrouillage selon l'une quelconque des revendications précédentes, **caractérisé en ce qu'**un doigt de déverrouillage (5) est disposé de façon à pouvoir pivoter autour du premier axe (2') d'une position de verrouillage dans une position de déverrouillage à l'encontre d'une force de ressort, l'excentre de serrage (6) pouvant être déplacé par lui d'une position de verrouillage dans une position de déverrouillage.

6. Dispositif de verrouillage selon la revendication 5, **caractérisé en ce qu'**un élément de déverrouillage (8) est disposé de façon à pouvoir pivoter autour du deuxième axe (3') d'une position de verrouillage dans une position de déverrouillage à l'encontre d'une force de ressort et est couplé de telle sorte au doigt de déverrouillage (5) via un couplage de mise en prise que l'élément de déverrouillage (8) peut être entraîné de sa position de verrouillage dans sa position de déverrouillage par le biais d'un mouvement de pivotement du doigt de déverrouillage (5) de la position de verrouillage dans la position de déverrouillage.

7. Dispositif de verrouillage selon la revendication 6, **caractérisé en ce que** le doigt de déverrouillage (5) est entraîné de sa position de verrouillage dans sa position de déverrouillage par un mouvement de pivotement de l'élément de déverrouillage (8) de la position de verrouillage dans la position de déverrouillage.

8. Dispositif de verrouillage selon l'une quelconque des revendications précédentes, **caractérisé en ce qu'**un excentrique à crochet (7) est disposé de façon à pouvoir pivoter autour du premier axe (2') et sécurise par interaction avec la première surface fonctionnelle (34) du cliquet (9) un état verrouillé du cliquet (9), le cliquet (9) pouvant être maintenu dans l'état verrouillé par une surface d'accroche (25) de l'excentrique à crochet (7) et l'excentrique à crochet (7) pouvant être déplacé entre sa position de verrouillage et sa position de déverrouillage, par le biais du doigt de déverrouillage (5) pouvant pivoter autour du premier axe (2').

9. Dispositif de verrouillage selon la revendication 8, **caractérisé en ce que** l'excentrique de serrage (6) est disposé entre l'excentrique à crochet (7) et le doigt de déverrouillage (5) de façon à pouvoir pivoter sur le premier axe (2') et que le doigt de déverrouillage (5) comporte un doigt (16) s'étendant parallèlement au premier axe (2') s'imbriquant dans un évidement de mise en prise de l'excentrique à crochet (7) et à travers lequel l'excentrique de serrage (6) peut être mis en prise de façon à pouvoir pivoter en direction de sa position de déverrouillage.

10. Dispositif de verrouillage selon l'une quelconque des revendications précédentes, **caractérisé en ce que** l'excentrique de serrage (6) est chargé par ressort en direction de sa position de verrouillage par un ressort de traction (38) précontraint.

11. Siège de véhicule, comprenant au moins un dispositif de verrouillage selon l'une quelconque des revendications précédentes.
